# EUROPEAN PATENT APPLICATION

(11) **EP 3 098 327 A1**
(43) Date of publication of application: **30.11.2016**
(21) Application number: 16170934.0
(22) Date of filing: 23.05.2016
(51) Int. Cl.: C14B 1/30, A43B 23/02, B32B 7/12, B32B 9/02, B29C 37/00, B32B 37/00, B32B 38/06, B29C 59/02, C14B 1/56, C14B 7/02, D06N 3/00

(54) **METHOD OF SYNTHESIZING FUNCTIONAL LEATHER**

(30) Priority: 29.05.2015 TW 104117451
(71) Applicant: Chaei Hsin Enterprise Co., Ltd., Taichung City 40761 (TW)
(72) Inventor: WANG, Shui Mu, 40761 Taichung City (TW)
(74) Representative: Cabinet Chaillot

(57) **Abstract**

A method of synthesizing functional leather which is comprised of a thermoplastic film (10) and a leather substrate (20), and the method contains steps of: A. rolling a heat resistant layer (11) and a low temperature layer (12) on the thermoplastic film (10) by using two rollers (A), wherein the low temperature layer (12) has a plurality of connecting components (121), and between the low temperature layer (12) and the leather substrate (20) is defined a channel (C); B. providing a mold (30) with a cavity (31) defined therein, wherein the mold (30) has a plurality of three-dimensional patterns (32) and has plural air orifices (33), the thermoplastic film (10) is placed on the plurality of three-dimensional patterns (32), and an air insolation element (40) is covered on the mold (30) and the leather substrate (20) to defined a conduit (B); C. vacuuming the cavity (31) and the plural air orifices (33) by using a vacuum unit (34), wherein a heating unit (50) melts the low temperature layer

## Description

### FIELD OF THE INVENTION

The present invention relates to a method of synthesizing functional leather which overcomes airtrap.

### BACKGROUND OF THE INVENTION

A conventional functional leather is rolled by at least one roller and then is vacuumed by a vacuuming unit, wherein the at least one roller has a plurality of three-dimensional patterns printed thereon, but the plurality of three-dimensional patterns cannot print different visible patterns based on using requirement.

The present invention has arisen to mitigate and/or obviate the afore-described disadvantages.

### SUMMARY OF THE INVENTION

The primary object of the present invention is to provide a method of synthesizing functional leather which overcomes airtrap.

To obtain the above objects, a method of synthesizing functional leather provided by the present invention, wherein the functional leather is comprised of a thermoplastic film and a leather substrate, and the method comprising steps of:
A. rolling a heat resistant layer and a low temperature layer on the thermoplastic film by using two rollers, wherein the low temperature layer has a plurality of connecting components separately arranged thereon, and between the low temperature layer and the leather substrate is defined a channel;
B. providing a mold with a cavity defined therein, wherein the mold has a plurality of three-dimensional patterns arranged on a top surface thereof and has plural air orifices defined therein and communicating with the cavity, the thermoplastic film is placed on the plurality of three-dimensional patterns of the mold, and an air insolation element is covered on the mold and the leather substrate to defined a conduit which is in communication with the channel and the plural air orifices;
C. vacuuming the cavity and the plural air orifices by using a vacuum unit, such that some of the plural air orifices in the conduit vacuum the channel, and a heating unit melts the low temperature layer, hence the plurality of connecting components connect with the leather substrate flatly, and the other of the plural air orifices in the heat resistant layer vacuum the thermoplastic film or the leather substrate, such that the thermoplastic film and the leather substrate form visible patterns thereon by ways of the plurality of three-dimensional patterns, and then the thermoplastic film and the leather substrate are removed from the mold.

### BRIEF DESCRIPTION OF THE DRAWINGS

FIG. 1 is a cross sectional view showing the exploded components of a thermoplastic film and a leather substrate of a functional leather according to a first embodiment of the present invention.
FIG. 2 is a perspective view showing placing the thermoplastic film and the leather substrate on a mold according to the first embodiment of the present invention.
FIG. 3 is a cross sectional view showing an air insolation element being covered on a top surface of the mold according to the first embodiment of the present invention.
FIG. 4 is a cross sectional view showing the operation of the mold according to the first embodiment of the present invention.
FIG. 5 is a perspective view showing the assembly of a functional leather according to the first embodiment of the present invention.
FIG. 6 is a cross sectional view showing the assembly of the functional leather according to the first embodiment of the present invention.
FIG. 7 is a cross sectional view showing the assembly of a functional leather according to a second embodiment of the present invention.
FIG. 8 is a cross sectional view showing the assembly of a functional leather according to a third embodiment of the present invention.
FIG. 9 is a cross sectional view showing the exploded components of a functional leather according to a fourth embodiment of the present invention.
FIG. 10 is a cross sectional view showing the exploded components of a functional leather according to a fifth embodiment of the present invention.

### DETAILED DESCRIPTION OF THE PREFERRED EMBODIMENTS

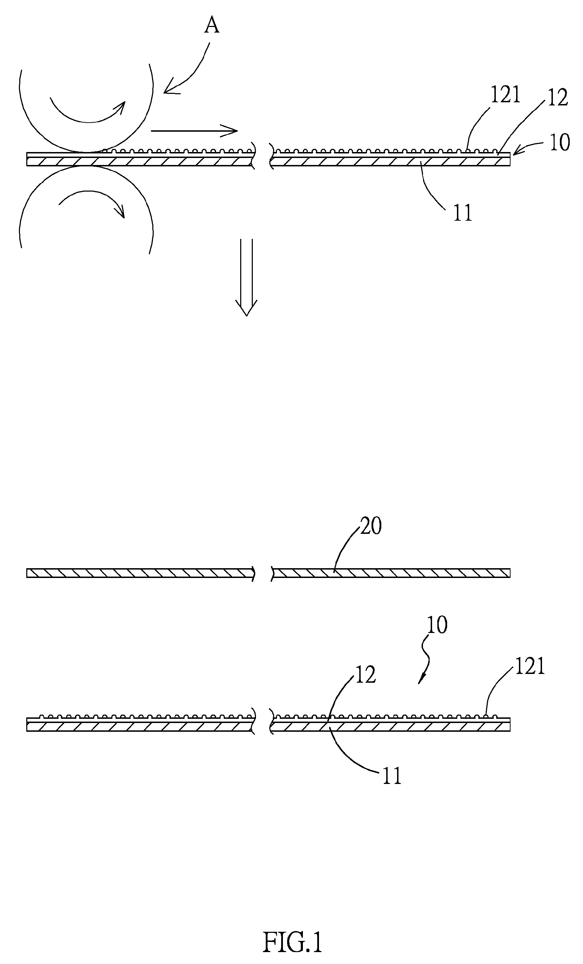

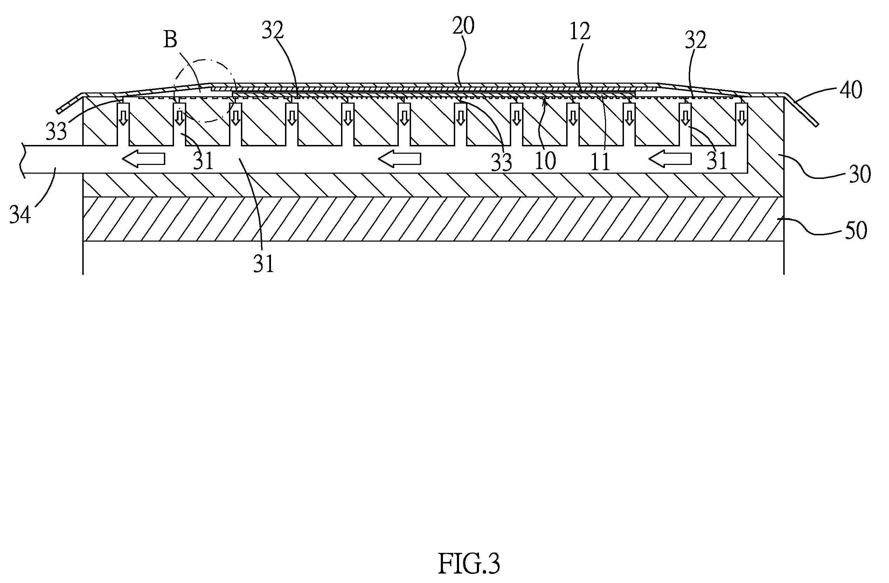

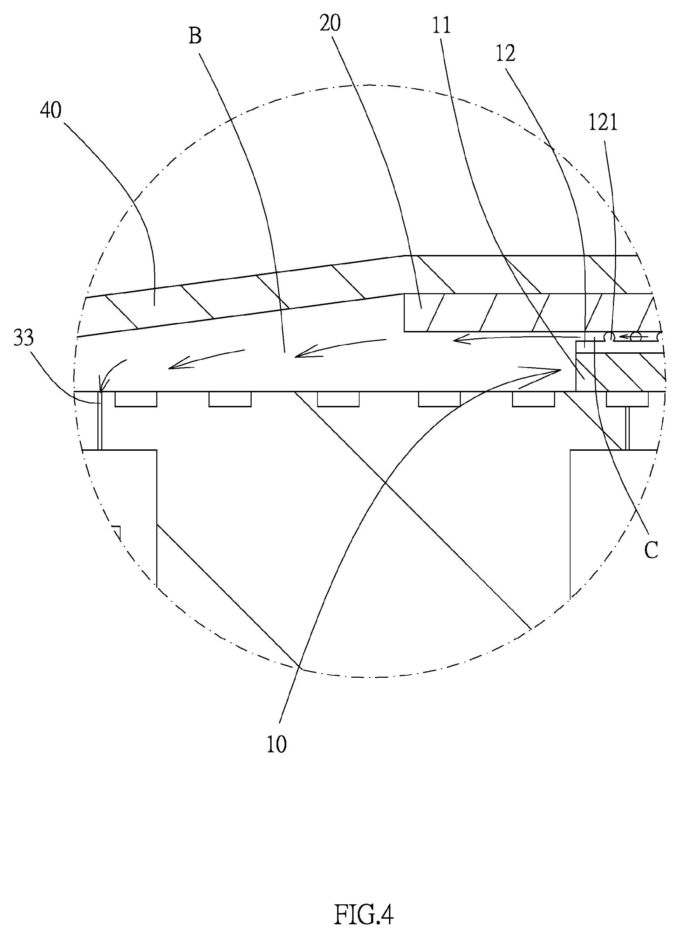

With reference to FIGS. 1 to 6, a method of synthesizing functional leather according a first embodiment of the present invention, wherein the functional leather is comprised of a thermoplastic film 10 and a leather substrate 20, and the method of synthesizing the functional leather comprises step of:
A. rolling a heat resistant layer 11 on a bottom surface of the thermoplastic film 10 and rolling a low temperature layer 12 on a top surface of the thermoplastic film 10 by using two rollers A, as shown in FIG. 1, wherein the low temperature layer 12 has a plurality of connecting components 121 (such as protrusions, ribs or recesses) separately arranged thereon, such that air between the heat resistant layer 11 and the low temperature layer 12 is exhausted, wherein the low temperature layer 12 is made of plastic material and its melting point is 5°C low than the heat resistant layer 11; and the thermoplastic film 10 and the leather substrate 20 are cut into plural straps, such that the leather substrate 20 is stacked on the plurality of connecting components 121, and between the low temperature layer 12 and the leather substrate 20 is defined a channel C, as illustrated in FIG. 4, wherein the channel C is in communication with the thermoplastic film 10 and the leather substrate 20, the heat resistant layer 11 of the thermoplastic film 10 is made of thermoplastic polymeric material and a colorant by using an extrusion machine, and wherein the thermoplastic polymeric material is any one of plastic polyurethane elastomer resin (TPU) + stilbene - butylene rubber (SBR), a polyurethane elastomer or a plastic resin (TPU) + styrene ethylene butylene styrene (SEBS), plastic polyurethane elastomer resin (TPU) + thermoplastic rubber (TPR), plastic polyurethane elastomer resin (TPU) + ethylene propylene diene monomer (EPDM), plastic polyurethane elastomer resin (TPU) + TPU hot melt adhesive, and plastic polyurethane elastomer resin (TPU) + nylon elastomer. In addition, a color layer is printed, coated or surface sandwiched on a bottom surface of the heat resistant layer 11, and the leather substrate 20 is any one of artificial leather (such as PU, TPU, TPO or TPE), natural leather (such as cowhide sheepskin, pigskin), and synthetic leather.

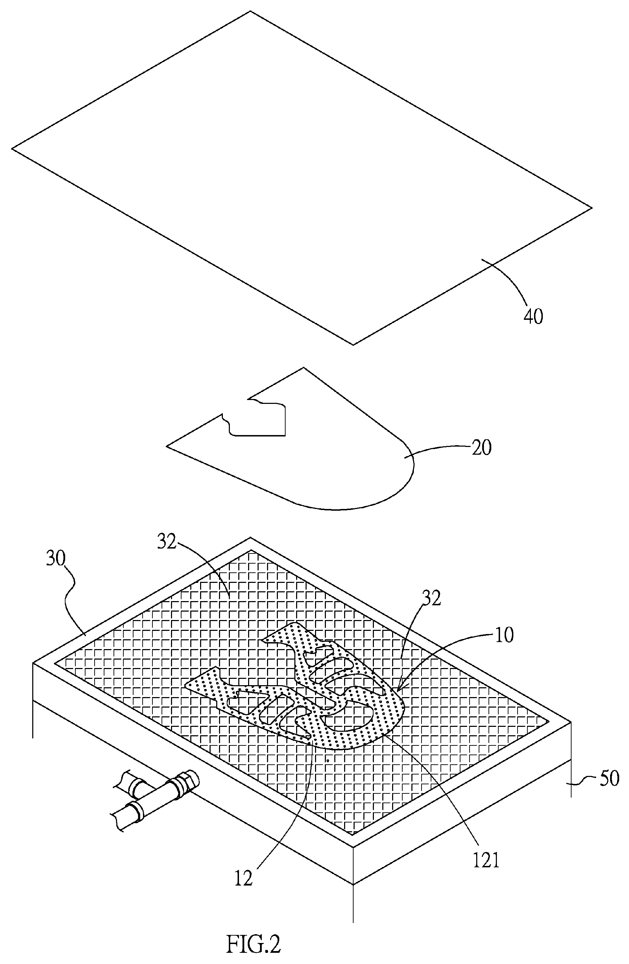

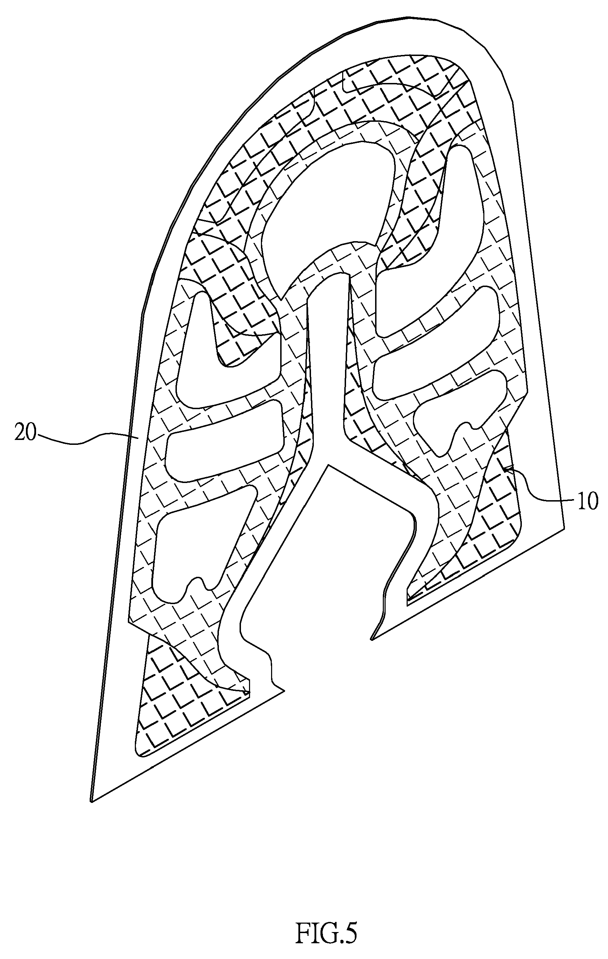

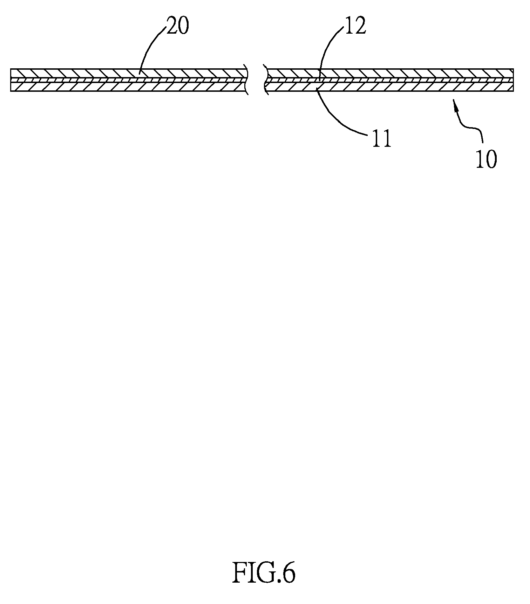

Referring further to FIGS. 2 to 4, the method of synthesizing the functional leather also comprises steps of:
B. providing a mold 30 with a cavity 31 defined therein, wherein the mold 30 has a plurality of three-dimensional patterns 32 arranged on a top surface thereof and has plural air orifices 33 defined therein and communicating with the cavity 31, wherein a diameter of each air orifice 33 is 0.1 mm; thereafter, the thermoplastic film 10 is placed on the plurality of three-dimensional patterns 32 of the mold 30 so that the plurality of connecting components 121 contact with the bottom surface of the thermoplastic film 10, and an air insolation element 40 is covered on the top surface of the mold 30 and a top surface of the leather substrate 20 to defined a conduit B which is in communication with the channel C and the plural air orifices 33, wherein the conduit B surrounds around outer rims of the thermoplastic film 10 and the leather substrate 20; and wherein a melting point of the insolation element 40 is higher than the heat resistant layer 11, and the insolation element 40 is made of rubber or silicone;
C. vacuuming the cavity 31 and the plural air orifices 33 by using a vacuum unit 34, such that the plural air orifices 33 in the conduit B vacuum the channel C between the conduit B and the plurality of connecting components 121 and sucks a bottom surface of the leather substrate 20, thereafter a heating unit 50 heats the thermoplastic film 10 so as to soften the heat resistant layer 11 and to melt the low temperature layer 12, hence the plurality of connecting components 121 connect with the bottom surface of the leather substrate 20 flatly, and the plurality of connecting components 121 on the bottom surface of the heat resistant layer 11 vacuum the thermoplastic film 10 so as to form visible patterns on the thermoplastic film 10 and the leather substrate 20 by ways of the plurality of three-dimensional patterns 32, then the thermoplastic film 10 and the leather substrate 20 are removed from the mold 30, as shown in FIGS. 5 and 6, wherein the heating unit 50 is mounted in the mold 30.

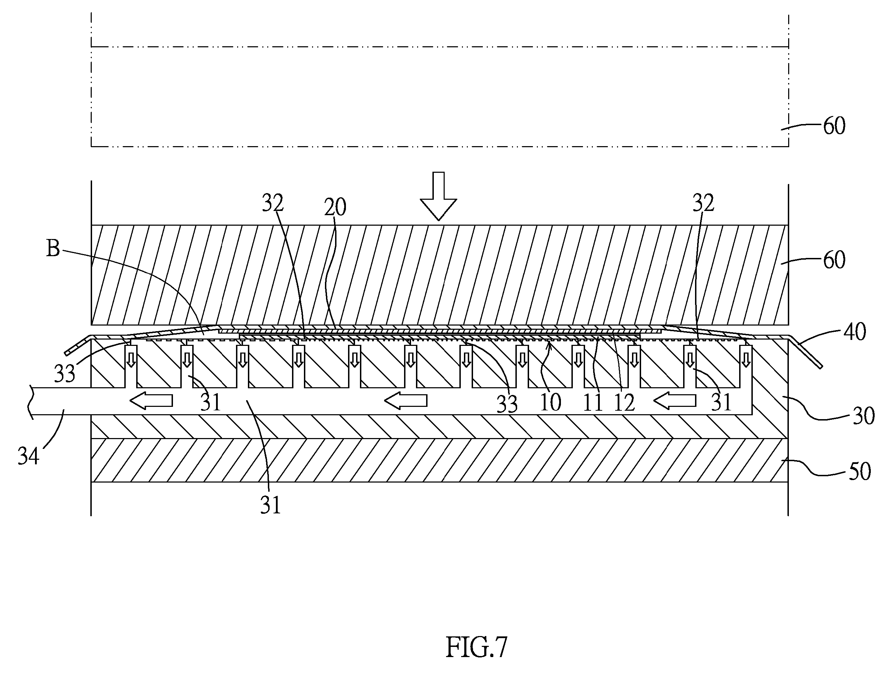

As illustrated in FIG. 7, a pressing member 60 is pressed on the air insolation element 40 to connect the leather substrate 20 and the thermoplastic film 10 tightly, thus forming visible patterns obviously by using the plurality of three-dimensional patterns 32.

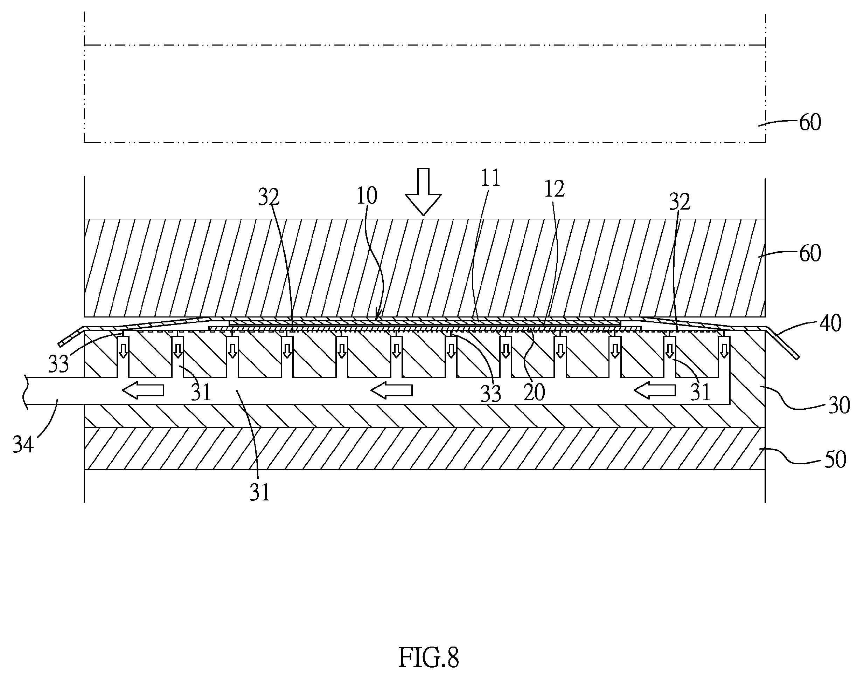

With reference to FIG. 8, in a second embodiment, a leather substrate 20 is placed on a plurality of three-dimensional patterns 32 of a mold 30, and then a thermoplastic film 10 is stacked on a top surface of the leather substrate 20, wherein the thermoplastic film 10 is in connection with a low temperature layer 12 on a bottom surface of a heat resistant layer 11, and the low temperature layer 12 has a plurality of connecting components 121 arranged on a bottom surface of the low temperature layer 12 which contacts with the top surface of the leather substrate 20, such that between the top surface of the leather substrate 20 and the bottom surface of the low temperature layer 12 is defined a channel C, the mold 30 and the thermoplastic film 10 cover an air insolation element 40 to define a conduit B, and when plural air orifices 33 of the mold 30 vacuum the channel C, they also suck the bottom surface of the low temperature layer 12.

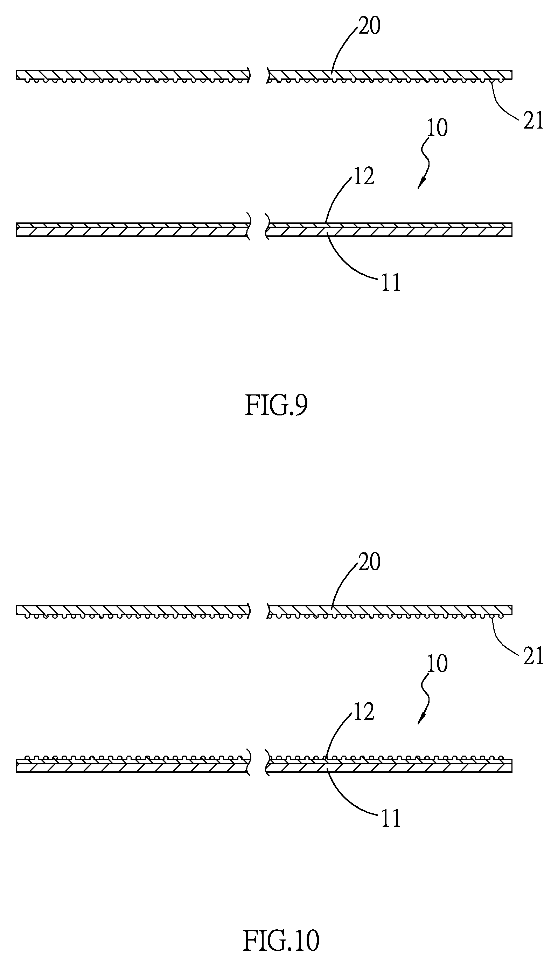

Referring further to FIG. 9, in a third embodiment, a leather substrate 20 is artificial leather (i.e., plastic leather) or synthetic leather (i.e., a combination of the plastic leather and animal skins), such that the leather substrate 20 has a plurality of matching components 21 (such as protrusions, ribs or recesses), and between a thermoplastic film 10 and the leather substrate 20 is defined a channel C (as shown in FIG. 4), wherein when plural of air orifices 33 of a mold 30 is at a negative pressure, they vacuum the channel C, the thermoplastic film 10 is heated, and the low temperature layer 12 is melted so as to form visible patterns on the thermoplastic film 10 and the leather substrate 20 by ways of the plurality of three-dimensional patterns 32 of the mold 30. Preferably, the plurality of matching components 21 reinforce the functional leather. As illustrated in FIG. 10, the plurality of matching components 21 can cooperate with the plurality of connecting components 121 based on using requirement.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A method of synthesizing functional leather which is comprised of a thermoplastic film (10) and a leather substrate (20), and the method comprising steps of:
A. rolling a heat resistant layer (11) and a low temperature layer (12) on the thermoplastic film (10) by using two rollers (A);
B. providing a mold (30) with a cavity (31) defined therein; ,
C. vacuuming the cavity (31) and plural air orifices (33) by using a vacuum unit (34); **characterized in that**
the low temperature layer (12) has a plurality of connecting components (121) separately arranged thereon, and between the low temperature layer (12) and the leather substrate (20) is defined a channel (C);
the mold (30) has a plurality of three-dimensional patterns (32) arranged on a top surface thereof and has the plural air orifices (33) defined therein and communicating with the cavity (31), the thermoplastic film (10) is placed on the plurality of three-dimensional patterns (32) of the mold (30), and an air insolation element (40) is covered on the mold (30) and the leather substrate (20) to defined a conduit (B) which is in communication with the channel (C) and the plural air orifices (33);
in the step of (C), some of the plural air orifices (33) in the conduit (B) vacuum the channel (C), and a heating unit (50) melts the low temperature layer (12), hence the plurality of connecting components (121) connect with the leather substrate (20) flatly, and the other of the plural air orifices (33) in the heat resistant layer (11) vacuum the thermoplastic film (10) or the leather substrate (20), such that the thermoplastic film (10) and the leather substrate (20) form visible patterns thereon by ways of the plurality of three-dimensional patterns (32), and then the thermoplastic film (10) and the leather substrate (20) are removed from the mold (30).

2. The method of the synthesizing functional leather as claimed in claim 1, wherein the channel (C) is in communication with the thermoplastic film (10) and the leather substrate (20), wherein the conduit (B) surrounds around outer rims of the thermoplastic film (10) and the leather substrate (20).

3. The method of the synthesizing functional leather as claimed in claim 1, wherein the plurality of connecting components (121) are any one of protrusions, ribs and recesses.

4. The method of the synthesizing functional leather as claimed in claim 1, wherein the low temperature layer (12) is rolled on a top surface of the thermoplastic film (10), and the low temperature layer (12) has the plurality of connecting components (121) arranged thereon, such that when the thermoplastic film (10) is placed on the mold (30), the plurality of connecting components (121) contact with a bottom surface of the leather substrate (20) to define the channel (C) between the bottom surface of the leather substrate (20) and a top surface of the low temperature layer (12), and an air insolation element (40) is covered on the top surface of the mold (30) and a top surface of the leather substrate (20) to defined the conduit (B), such that when the plural air orifices (33) of the mold (30) vacuum the channel (C), they also suck the bottom surface of the leather substrate (20).

5. The method of the synthesizing functional leather as claimed in claim 1, wherein the low temperature layer (12) is rolled on a bottom surface of the thermoplastic film (10), the low temperature layer (12) has a plurality of connecting components (121) arranged on a top surface of the low temperature layer (12) which contacts with a top surface of the leather substrate (20), such that between a top surface of the leather substrate (20) and a bottom surface of the low temperature layer (12) is defined a channel (C), the mold (30) and the thermoplastic film (10) over an air insolation element (40) to define a conduit (B), and when plural air orifices (33) of the mold (30) vacuum the channel (C), they also suck the bottom surface of the low temperature layer (12).

6. The method of the synthesizing functional leather as claimed in claim 1, wherein the leather substrate (20) has a plurality of matching components (21), and between the plurality of matching components (21) and the plural connecting components (121) is defined the channel (C).

7. The method of the synthesizing functional leather as claimed in claim 1, wherein a color layer is printed, coated or surface sandwiched on a bottom surface of the heat resistant layer (11).

8. A method of synthesizing functional leather which is comprised of a thermoplastic film (10) and a leather substrate (20), and the method comprising steps of:
A. forming a plurality of matching components (21) on a first surface of a leather substrate (20); and rolling a heat resistant layer (11) and a low temperature layer (12) on the thermoplastic film (10) by using two rollers (A);
B. providing a mold (30) with a cavity (31) defined therein;
C. vacuuming the cavity (31) and plural air orifices (33) by using a vacuum unit (34) and melting the low temperature layer (12) by ways of a heating unit (50); **characterized in that**
the low temperature layer (12) has a plurality of connecting components (121) separately arranged thereon to connect with the leather substrate (20), and between the low temperature layer (12) and the leather substrate (20) is defined a channel (C);
the mold (30) has a plurality of three-dimensional patterns (32) arranged on a top surface thereof and has the plural air orifices (33) defined therein and communicating with the cavity (31), the thermoplastic film (10) is placed on the plurality of three-dimensional patterns (32) of the mold (30), and an air insolation element (40) is covered on the mold (30) and the leather substrate (20) to defined a conduit (B) which is in communication with the channel (C) and the plural air orifices (33);
in the step of (C), the plurality of matching components (21) insert into the low temperature layer (12), and the plural air orifices (33) vacuum the thermoplastic film (10) or the leather substrate (20) so that the thermoplastic film (10) and the leather substrate (20) form visible patterns thereon by ways of the plurality of three-dimensional patterns (32).

9. The method of the synthesizing functional leather as claimed in claim 8, wherein the channel (C) is in communication with the thermoplastic film (10) and the leather substrate (20), wherein the conduit (B) surrounds around outer rims of the thermoplastic film (10) and the leather substrate (20).

10. The method of the synthesizing functional leather as claimed in claim 8, wherein the plurality of connecting components (121) are any one of protrusions, ribs and recesses.
